# EUROPÄISCHE PATENTSCHRIFT

(11) **EP 2 091 699 B1**
(45) Veröffentlichungstag und Bekanntmachung des Hinweises auf die Patenterteilung: **16.04.2014**
(21) Anmeldenummer: 07817691.4
(22) Anmeldetag: 18.10.2007
(51) Int. Cl.: B25J 9/10, B25J 9/16

(54) **VERFAHREN UND VORRICHTUNG ZUR FEINPOSITIONIERUNG EINES WERKZEUGS MIT EINER HANDHABUNGSEINRICHTUNG**
METHOD AND DEVICE FOR FINE-POSITIONING A TOOL HAVING A HANDLING DEVICE
PROCÉDÉ ET DISPOSITIF POUR LE POSITIONNEMENT FIN D'UN OUTIL AVEC UN ORGANE DE MANIPULATION

(30) Priorität: 20.10.2006 DE 102006049627
(43) Veröffentlichungstag der Anmeldung: 26.08.2009
(73) Patentinhaber: Fraunhofer-Gesellschaft zur Förderung der angewandten Forschung e.V., 80686 München (DE); Rheinisch-Westfälische Technische Hochschule Aachen (RWTH), 52062 Aachen (DE)
(72) Erfinder: REGAARD, Boris, 48198 Ypsilanti, Michigan (US); KAIERLE, Stefan, 52134 Herzogenrath (DE)
(74) Vertreter: Gagel, Roland
(86) Internationale Anmeldenummer: PCT/DE2007/001856
(87) Internationale Veröffentlichungsnummer: WO 2008/046408

(56) Entgegenhaltungen:
- EP-A- 0 141 717
- DE-A1- 3 618 391
- DE-A1- 3 627 560

## Beschreibung

### Technisches Anwendungsgebiet

Die vorliegende Erfindung betrifft ein Verfahren sowie eine Vorrichtung zur Feinpositionierung eines Werkzeugs bei der Bearbeitung eines Objekts, bei dem das Werkzeug oder Objekt von einer Handhabungseinrichtung geführt wird, die mehrere Bewegungsachsen zur Grobpositionierung des Werkzeugs oder Objekts aufweist..

Das Verfahren und die Vorrichtung sind für alle Bearbeitungsverfahren geeignet, bei denen eine Vorschubbewegung des Werkzeugs oder des Werkstücks bzw. Objekts durchgeführt wird. Beispielhafte Anwendungsgebiete sind das robotergeführte Fräsen, das robotergeführte Lichtbogenschweißen, das robotergeführte Laserstrahlschneiden oder eine handgeführte Bearbeitung.

### Stand der Technik

Die Automatisierung der Materialbearbeitung mit Handhabungseinrichtungen, in erster Linie mit Knickarm- und Gantry-Robotern, nimmt in der Fertigung einen hohen Stellenwert ein. Mit fortschreitenden Qualitätsanforderungen steigen die Anforderungen and die Genauigkeit der Robotersysteme. Hierbei müssen derzeit erhebliche Anstrengungen unternommen werden, um die Bahngenauigkeit der Roboter durch konstruktive Maßnahmen und neue Steuerungsstrategien zu verbessern.

Das Dokument JP-A-11333771 offenbart eine Vorrichtung zur Feinpositionierung eines Werkzeuges bei der Bearbeitung eines Objektes mit einer Handhabungseinrichtung mit 6 Bewegungsachsen zur Grobpositionierung und zusätzliche Aktoren zur Feinpositionierung in 2 Achsen.

Die Aufgabe der vorliegenden Erfindung besteht darin, ein Verfahren sowie eine Vorrichtung zur Feinpositionierung eines Werkzeugs mit einer Handhabungseinrichtung anzugeben, mit denen sich eine hohe Bahn- und Positioniergenauigkeit des Werkzeugs am Objekt erreichen lässt. Das Verfahren soll auch den Einsatz von Handhabungseinrichtungen, insbesondere einfachen Robotersystemen, ermöglichen, die eine geringe Bahngenauigkeit aufweisen.

### Darstellung der Erfindung

Die Aufgabe wird mit dem Verfahren und der Vorrichtung gemäß den Patentansprüchen 1 und 12 gelöst. Vorteilhafte Ausgestaltungen des Verfahrens sowie der Vorrichtung sind Gegenstand der Unteransprüche oder lassen sich der nachfolgenden Beschreibung sowie den Ausführungsbeispielen entnehmen.

Beim vorliegenden Verfahren wird das Werkzeug oder das Objekt von einer Handhabungseinrichtung geführt, die mehrere Bewegungsachsen zur Grobpositionierung des Werkzeugs oder Objekts in Form einer kinematischen Kette aufweist. Bei der Handhabungseinrichtung handelt es sich vorzugsweise um einen Roboter, insbesondere einen Industrieroboter. Neben einer automatischen Handhabungseinrichtung kann es sich jedoch auch um eine nicht automatische, d.h. handgeführte, Handhabungseinrichtung handeln. Zur Erhöhung der Positioniergenauigkeit bei der Führung des Werkzeugs oder Objekts wird ein zusätzlicher Aktor am Endglied der kinematischen Kette, d. h. zwischen dem Werkzeug oder Objekt und den Bewegungsachsen, eingesetzt, der zumindest einer Dimension oder Achse eine höhere Stellgenauigkeit als die anderen Bewegungsachsen aufweist. Die Feinpositionierung erfolgt mit diesem zusätzlichen Aktor, indem die Relativbewegung, charakterisiert durch Relativgeschwindigkeit und relative Bewegungsrichtung, zwischen dem Objekt und dem Werkzeug oder dem Endglied der kinematischen Kette während der Führung des Werkzeugs oder Objekts mit zumindest einem Sensor erfasst und bei einer Abweichung einer daraus errechneten Ist-Bewegungsbahn dieses Endglieds oder des Werkzeugs oder Objekts von einer Soll-Bewegungsbahn das Werkzeug oder Objekt mit dem Aktor zur möglichst genauen Kompensation der Abweichung automatisch nachgeführt wird. Bei den Bewegungsbahnen kann es sich hierbei um Bewegungsbahnen relativ zu einer im Raum festen Referenz oder relativ zum Objekt handeln.

Mit dem Verfahren lässt sich somit eine Handhabungseinrichtung, beispielsweise ein Industrieroboter, mit geringer Bahngenauigkeit zur Führung des Werkzeugs oder Objekts auch bei hohen Anforderungen an die Stellgenauigkeit einsetzen, indem die durch die Bahnungenauigkeit verursachten Abweichungen von der Soll-Bewegungsbahn durch den zusätzlichen Aktor ausgeglichen werden. Hierdurch ist eine Präzisionsbearbeitung auch mit einfachen Robotersystemen oder mit Handführung möglich, bei der eine Positioniergenauigkeit von bspw. 50 bis 200 µm erreicht werden kann. Die erreichbare Bahngenauigkeit ist dabei unabhängig von der Bahngenauigkeit der eingesetzten Handhabungseinrichtung. Die hohe Stellgenauigkeit des zusätzlichen Aktors kann bspw. durch Einsatz eines Linearachsen aufweisenden Aktors oder eines x-y-Scanners - im Falle der Bearbeitung mit einem Bearbeitungsstrahl - erreicht werden. Als Roboter können bspw. Knickarm-Roboter mit niedriger Bahngenauigkeit eingesetzt werden, die im Vergleich zu Robotersystemen mit höherer Bahngenauigkeit kostengünstiger bereit gestellt werden können. Bei den Objekten kann es sich bspw. um mechanische Werkstücke oder auch um Patienten handeln. Die Hauptvorschubbewegung in einer vorgegebenen Richtung kann dabei selbstverständlich auch mit einer zusätzlichen Vorschubeinrichtung für das Objekt bzw. Werkstück erfolgen, wobei das Werkzeug dann durch die Handhabungseinrichtung zur Einhaltung der relativen Soll-Bewegungsbahn zum Objekt geführt wird. Im umgekehrten Fall kann auch das Objekt von der Handhabungseinrichtung geführt und das Werkzeug mit einer zusätzlichen Vorschubeinrichtung in einer vorgegebenen Richtung bewegt werden.

Im Folgenden wird die Erfindung anhand einer Anwendung beschrieben, bei der das Werkzeug von der Handhabungseinrichtung geführt wird. Selbstverständlich lässt sich diese Beschreibung ohne weiteres auch auf den Fall übertragen, bei dem nicht das Werkzeug sondern das Objekt von der Handhabungseinrichtung geführt wird.

Bei dem Sensor zur Erfassung der Relativbewegung, d.h. der Relativgeschwindigkeit und relativen Bewegungsrichtung, kann es sich sowohl um einen berührungslosen als auch um einen mit Berührung arbeitenden Sensor, bspw. in Form einer taktilen Messung über ein Reibrad oder eine Kugel, handeln. Vorzugsweise wird jedoch ein berührungslose Sensor eingesetzt. Der Sensor ist vorzugsweise an der am Endglied der kinematischen Kette, bspw. der Roboterhand, oder am Werkzeug oder Aktor starr befestigt.

In einer besonders bevorzugten Ausgestaltung wird ein starr mit dem Aktor, dem Werkzeug oder dem Endglied der kinematischen Kette verbundene Kamera als Sensor eingesetzt, die von der Oberfläche des Objektes reflektierte Bilder kontinuierlich oder in ausreichend kurzen Zeitabständen liefert, um einander überlappende Bilder zu erhalten. Dabei wird ausgenutzt, dass die Werkstücke bei der Materialbearbeitung in der Regel Oberflächenrauhigkeiten aufweisen, die bei Beleuchtung, insbesondere bei zur Oberfläche senkrechter oder nur gering geneigter Beleuchtung, ein unregelmäßiges Reflexionsmuster erzeugen. Die hierfür erforderliche Werkstückrauhigkeit ist bei den meisten Anwendungen automatisch gegeben. Jeder beleuchtete Oberflächenbereich des Werkstücks erzeugt dabei ein für diesen Bereich charakteristisches, unregelmäßiges Reflexionsmuster, das mit der vorzugsweise senkrecht oder gering geneigt angeordneten Kamera, bspw. einer CMOS-Kamera, erfasst werden kann. Durch Vergleich von zwei aufeinander folgenden Aufnahmen bzw. Reflexionsmustern kann die Relativbewegung zwischen dem Sensor und dem Werkstück ermittelt werden, indem Bildausschnitte mit größter Ähnlichkeit in diesen Aufnahmen gefunden werden. Die Relativbewegung oder Relativverschiebung entspricht der Pixelverschiebung dieser Bereiche unter Berücksichtigung der optischen Abbildung für die Aufzeichnung der Reflexionsmuster. Für die Ermittlung der jeweils ähnlichsten Teilbereiche wird vorzugsweise die Technik der Kreuzkorrelation eingesetzt. Das für die Aufnahme der Reflexionsmuster erforderliche Auflicht kann aus der Umgebung stammen oder auch durch eine gesonderte Lichtquelle, bspw. mit einem Diodenlaser, erzeugt werden.

Das vorliegende Verfahren wird bevorzugt bei der Bearbeitung eines Werkstücks mit einem Bearbeitungsstrahl eingesetzt, der aus dem Bearbeitungskopf austritt. Hierbei wird das Werkstück vorzugsweise zumindest annähernd koaxial zum Bearbeitungsstrahl, bspw. einem Ionen-, Elektronen- oder Laserstrahl, im Bereich des Auftreffortes des Bearbeitungsstrahls auf dem Werkstück mit optischer Strahlung beleuchtet. Durch diesen koaxialen Aufbau des Sensorsystems für die Messung im Bearbeitungspunkt wird ein kompakter Aufbau des Gesamtsystems erreicht. Eine besonders vorteilhafte Anwendung des Verfahrens sowie der zugehörigen Vorrichtung stellt die Lasermaterialbearbeitung dar, wobei alle Arten von Laserstrahlquellen, bspw. CO₂-Laser, Nd:YAG-Laser oder Diodenlaser, als Strahlquellen für den Bearbeitungsstrahl eingesetzt werden können.

Die Soll-Bewegungsbahn kann bei einer automatischen Handhabungseinrichtung durch die Steuerung. (Steuereinheit) der Handhabungseinrichtung vorgegeben sein, wie dies bei vielen robotergeführten Anwendungen üblich ist. Die Soll-Bewegungsbahn muss dabei vorab entsprechend programmiert oder eingelernt werden.

In einer vorteilhaften Weiterbildung des vorliegenden Verfahrens wird diese Soll-Bewegungsbahn nicht durch die Steuerung des Roboters vorgegeben, sondern während der Bearbeitung direkt am Objekt erfasst. Hierzu können bspw. vorab entsprechende künstliche Markierungen auf das Objekt aufgebracht werden, bspw. in Form von ggf. farbigen Linien oder Punkten oder in das Objekt eingebrachten linienförmigen Strukturveränderungen. Weiterhin besteht auch die Möglichkeit, natürlich vorgegebene Strukturen am Objekt für die Erfassung der Soll-Bewegungsbahn heranzuziehen. Dies ist insbesondere beim Verschweißen von zwei Objektteilen vorteilhaft, bei dem der Spalt am Stumpfstoß zwischen den beiden zu verschweißenden Teilen jeweils in einem in Vorschubrichtung vor dem momentanen Bearbeitungsort liegenden Bereich erfasst und zur Ermittlung der Soll-Bewegungsbahn herangezogen werden kann. Für die Erfassung der entsprechenden Markierung(en) am Objekt ist in einer Ausgestaltung ein zusätzlicher vorlaufender Sensor am Werkzeug, am Aktor oder am Endglied der kinematischen Kette, z.B. der Roboterhand, angebracht sein, beispielsweise ein so genannter Nahtfolgesensor zur Detektion der Nahtposition bei einem Schweißvorgang. In einer bevorzugten Ausgestaltung wird der für die Erfassung der Relativbewegung vorhandene Sensor auch für die Detektion der Markierung(en) genutzt. Letzteres ist insbesondere beim Einsatz einer Kamera als Sensor möglich, die jeweils auch einen Bereich in Bewegungsrichtung vor dem Werkzeug erfasst, der mit einem geeigneten Bildverarbeitungsverfahren zur Detektion der Markierungen ausgewertet werden kann.

Die für die Durchführung des Verfahrens ausgebildete Vorrichtung umfasst die Handhabungseinrichtung mit mehreren Bewegungsachsen zur Grobpositionierung des Werkzeugs, den zwischen den Bewegungsachsen und dem Werkzeug angeordneten zusätzlichen Aktor mit der entsprechend höheren Stellgenauigkeit in den ein, zwei oder drei Dimensionen, den zumindest einen Sensor am Werkzeug, dem Aktor oder dem Endglied der kinematischen Kette zur Erfassung der Relativbewegung, charakterisiert durch Relativgeschwindigkeit und eine relative Bewegungsrichtung, zum zu bearbeitenden Objekt sowie eine Steuereinrichtung, die eine Abweichung der erfassten Bewegungsbahn des Endglieds der kinematischen Kette oder des Werkzeugs von einer Soll-Bewegungsbahn aus den Daten des Sensors errechnet und den Aktor zur möglichst vollständigen Kompensation dieser Abweichung ansteuert.

### Kurze Beschreibung der Zeichnungen

Das vorliegende Verfahren sowie die zugehörige Vorrichtung werden nachfolgend anhand von Ausführungsbeispielen in Verbindung mit den Zeichnungen nochmals näher erläutert. Hierbei zeigen:
- Fig. 1: einen Wirkungsplan für eine konventionelle Robotersteuerung bei der Führung eines Werkzeugs;
- Fig. 2: eine Prinzipskizze eines ersten Ausführungsbeispiels des vorliegenden Verfahrens;
- Fig. 3: einen Wirkungsplan für das Ausführungsbeispiel der Figur 2;
- Fig. 4: eine Prinzipskizze eines zweiten Ausführungsbeispiels des vorliegenden Verfahrens;
- Fig. 5: einen Wirkungsplan für das Ausführungsbeispiel der Figur 4;
- Fig. 6: eine Prinzipskizze eines dritten Ausführungsbeispiels des vorliegenden Verfahrens;
- Fig. 7: einen Wirkungsplan für das Ausführungsbeispiel der Figur 6;
- Fig. 8: ein Beispiel für den optischen Aufbau zur Messung der Relativbewegung beim vorliegenden Verfahren;
- Fig. 9: ein Beispiel für ein schematisiertes mit dem Sensor erfasstes Bild, aus dem auch eine Soll-Bewegungsbahn ermittelt werden kann; und
- Fig. 10: ein Beispiel für den optischen Aufbau zur Messung der Relativbewegung und gleichzeitigen Erfassung der Sollkontur beim vorliegenden Verfahren.

### Wege zur Ausführung der Erfindung

Die folgenden Ausführungsbeispiele zeigen den Einsatz des vorliegenden Verfahrens bei der Führung eines Werkzeugs mit einem Roboter zur Bearbeitung eines Werkstücks. Die Bewegung der Roboterhand relativ zum Werkstück oder zu einer zum Werkstück unbeweglichen Referenz, im Folgenden auch als Relativbewegung oder Relativverschiebung bezeichnet, wird dabei durch eine geeignete Sensorik direkt gemessen und die Abweichung von der Soll-Bewegungsbahn, auch als Sollkontur bezeichnet, über eine präzise Stellkinematik - den zusätzlichen Aktor - an der Roboterhand kompensiert. Ein derartiges System ist bei hinreichend schneller Sensorik und Aktorik unabhängig von der Genauigkeit des eingesetzten Roboters.

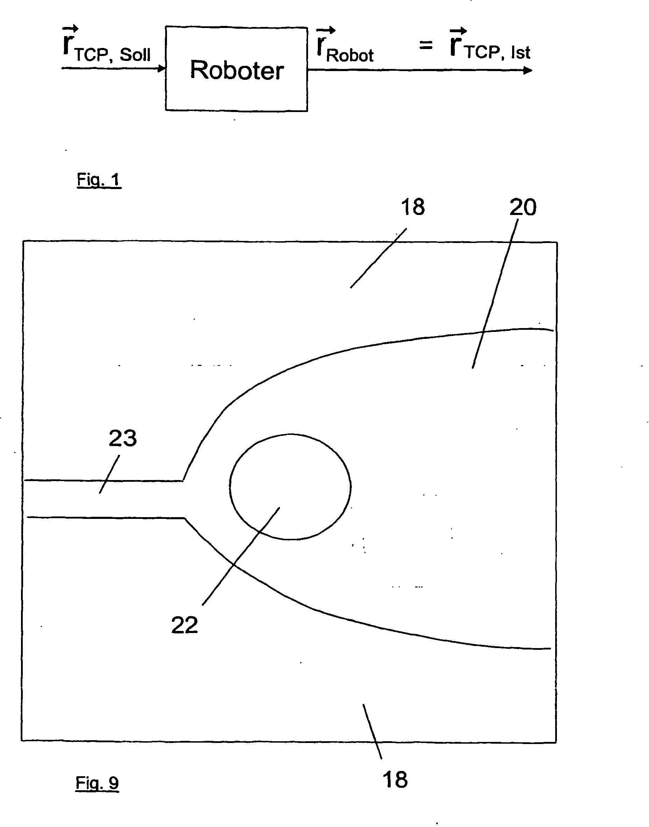

Bei herkömmlichen Robotersystemen, bei denen ein Werkzeug mit dem Roboter auf einer Soll-Bewegungsbahn geführt wird, erfolgt die Führung in der Regel durch eine vorprogrammierte Ansteuerung des Roboters. Den Wirkungsplan einer derartigen Robotersteuerung zeigt Figur 1. Der Vektor *̅r̅*̅ ist in diesem wie auch in den folgenden Beispielen ortsfest zum Werkstück. Der Ortsvektor *̅r̅*̅_{TCP,Soll} ist durch die Soll-Bewegungsbahn vorgegeben. Hierbei wird mit TCP (Tool Center Point) ein zentraler Referenzpunkt des Werkzeugs bezeichnet, der in der Regel mit dem Bearbeitungspunkt am Werkstück identisch ist. Aus dem Wirkungsplan der Figur 1 ist ersichtlich, dass sich eine geringe Bahngenauigkeit des Roboters bzw. der Roboterhand direkt auf die Position des TCP *̅r̅*̅_{TCP,Ist} auswirkt, die dann von der Soll-Position bzw. Soll-Bewegungsbahn abweicht.

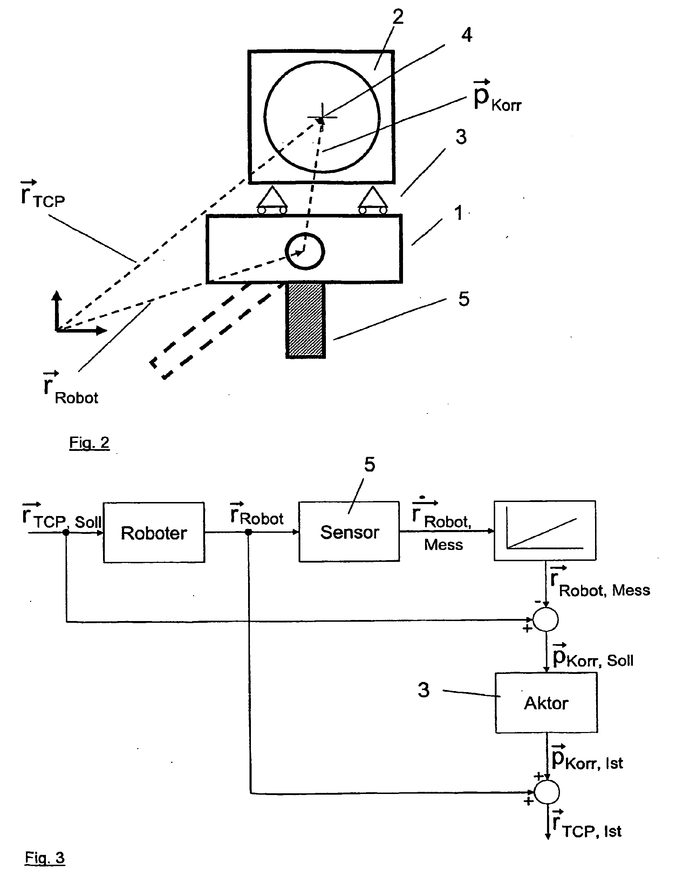

Beim vorliegenden Verfahren wird zwischen der Roboterhand 1 und dem Werkzeug 2 eine zusätzliche Aktorik 3 eingesetzt, wie dies der Prinzipskizze der Figur 2 zu entnehmen ist. Diese zusätzliche Aktorik 3 stellt eine Feinpositioniereinrichtung dar, die eine höhere Stellgenauigkeit aufweist als die in der kinematischen Kette vorangehenden Achsen des Roboters. Im vorliegenden wie in den folgenden Beispielen wird hierbei jeweils nur eine eindimensionale Feinpositionierbewegung betrachtet. Selbstverständlich lässt sich durch geeignete Wahl der zusätzlichen Aktorik jedoch auch eine Feinpositionierung in zwei oder drei Dimensionen realisieren.

Durch die zusätzliche Aktorik 3 lassen sich die Ungenauigkeiten der Bewegungsachsen des Roboters kompensieren, so dass der TCP 4 immer mit hoher Genauigkeit an der korrekten Position liegt, d.h. dass *̅r̅*̅_{TCP,Soll} = *̅r̅*̅_{TCP,Ist}. Der Sensor 5 ist in diesem Beispiel starr an der Roboterhand 1 befestigt.

Figur 3 zeigt den Wirkungsplan für eine Robotersteuerung mit diesem Prinzip. Der Vektor *̅p̅*̅ ist hierbei ortsfest zum Roboterkopf bzw. der Roboterhand 1 und stellt die durch den Aktor 3 beeinflusste Größe dar. Der Sensor 5 erfasst die Bewegungsgeschwindigkeit und - richtung der Roboterhand 1 relativ zum Werkstück, d. h. den Geschwindigkeitsvektor *̅r̅*̅_{Robot,Mess}. Aus dieser Information kann eine Abweichung **von** der Soll-Bewegungsbahn ermittelt und durch Veränderung des Vektors *̅p̅*̅ korrigiert werden.

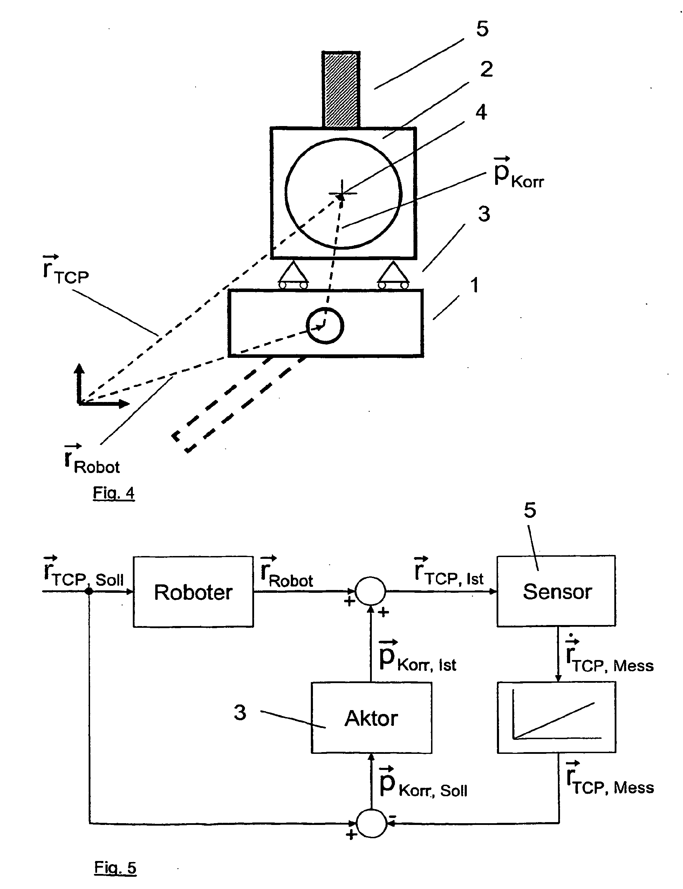

Figur 4 zeigt eine Prinzipskizze eines weiteren Ausführungsbeispiels des vorliegenden Verfahrens. Diese Ausgestaltung unterscheidet sich von der Ausgestaltung der Figur 2 lediglich dadurch, dass der Sensor 5 nicht an der Roboterhand 1 angebracht ist, sondern mit dem Werkzeug 2 starr verbunden ist. Der zugehörige Wirkungsplan ist in Figur 5 dargestellt. In diesem Fall erfasst der Sensor 5 die Ist-Bewegung des TCP 4, um aus dem Bewegungsvektor eine Abweichung von der Soll-Bewegungsbahn bzw, momentanen Soll-Position *̅r̅*̅ _{TCP,Soll} zu ermitteln. Auf Basis dieser Abweichung wird dann wiederum der Aktor 3 zur Kompensation angesteuert.

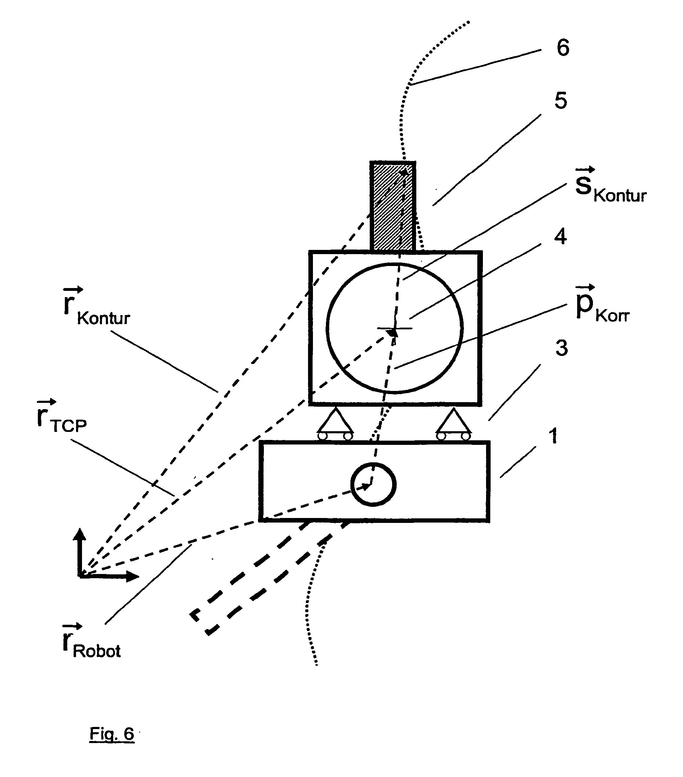

Figur 6 zeigt eine Prinzipskizze einer weiteren Ausführungsform des vorliegenden Verfahrens. Bei dieser Ausführungsform wird die Sollkontur bzw. Soll-Bewegungsbahn nicht durch die Steuerung des Roboters vorgegeben, sondern online am Bearbeitungskopf über eine zu verfolgende Kontur gemessen. Diese Kontur kann bspw. eine Werkstückkontur wie die Werkstückkante oder ein Spalt beim Stumpfstoß-Schweißen sein. Weiterhin besteht die Möglichkeit, eine durch Farb- oder Strukturveränderung aufgebrachte Kontur als Sollkontur zu erfassen. Bei dieser Ausgestaltung muss die Handhabungseinrichtung lediglich die zu verfolgende Kontur innerhalb des Messbereichs eines Konturmesssensors (bei einem zur Roboterhand ortsfesten Sensor) oder innerhalb des Stellbereichs des Aktors (bei einem ortsfest zum TCP angebrachten Sensor) abfahren. Die Messung der.Sollposition und die Feinpositionierung erfolgen durch die zusätzliche Sensorik (Konturmesssensor) und die Aktorik 3. Eine entsprechende Prinzipskizze ist in Figur 6 dargestellt. Diese Figur zeigt zusätzlich die auf dem Werkstück aufgebrachte oder bereits durch das Werkstück vorgegebene Kontur 6, die mit der zusätzlichen Sensorik oder auch mit dem Sensor 5 zur Erfassung der Relativbewegung erfasst wird. Der zusätzliche Ortsvektor *̅s̅*̅_{Kontur} entspricht dabei dem Vektor vom TCP 4 zum momentan vermessenen Punkt der Sollkontur.

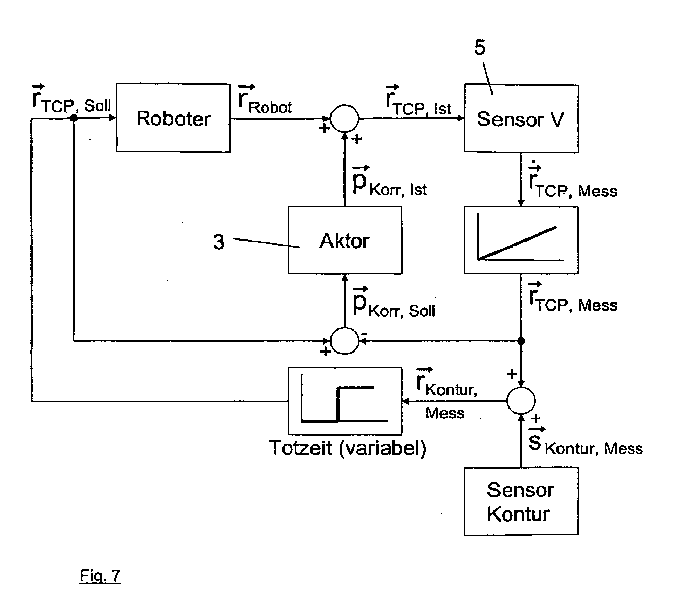

Figur 7 zeigt den Wirkungsplan der Robotersteuerung bei einer derartigen Ausgestaltung des Verfahrens. Der Vektors *̅s̅*̅ ist hierbei ortsfest zum Sensor 5 bzw. TCP 4. Durch die Vermessung der in Bewegungsrichtung vor dem Bearbeitungskopf liegenden Markierung bzw. Kontur wird die Sollkontur bzw. Soll-Bewegungsbahn erfasst und kann als Stellgröße für den Roboter selbst verwendet werden. Die Feinpositionierung erfolgt unverändert durch den Aktor 3. Hiermit ist eine autonome Verfolgung von Konturen auf dem Werkstück möglich. Eine Programmierung der Sollkontur entfällt.

Die in Figur 7 angedeutete variable Totzeit ergibt sich daraus, dass die Trajektorie der Roboterhand *̅r̅*̅_{Robot}(t) nicht zwingend die gleiche Länge hat, wie die gemessene Trajektorie der Kontur *̅r̅*̅_{Kontur,Mess} (t) . Die Differenz der Trajektorienlänge würde bei konstanter Totzeit zu einer Variation der resultierenden Vorschubgeschwindigkeit *ṙ*_{TCP} führen. Eine konstante Vorschubgeschwindigkeit wird erreicht durch Berechnung äquidistanter Punkte auf der Konturtrajektorie *̅r̅*̅_{Kontur,Mess}(t), wobei diese nicht zwingend mit den gemessenen Punkten der Trajektorie zusammenfallen, also interpoliert werden müssen. Eine konstante Vorschubgeschwindigkeit *̅r̅*̅ _{cp} bei nicht gleicher Trajektorienlänge der Kontur *̅r̅*̅_{Kontur,Mess}(t) und der Roboterhand *̅r̅*̅_{Robot} (t) führt zu einer Abweichung zwischen Positionen der Roboterhand *̅r̅*̅_{Robot} und des TCP *̅r̅*̅_{TCP}, die größer als der Stellweg des Aktors werden kann. In diesem Fall muss eine Korrektur des Vorschubs der Roboterhand *ṙ*_{Robot} oder eine Anpassung der Vorschubgeschwindigkeit des TCP *ṙ*_{TCP} vorgenommen werden.

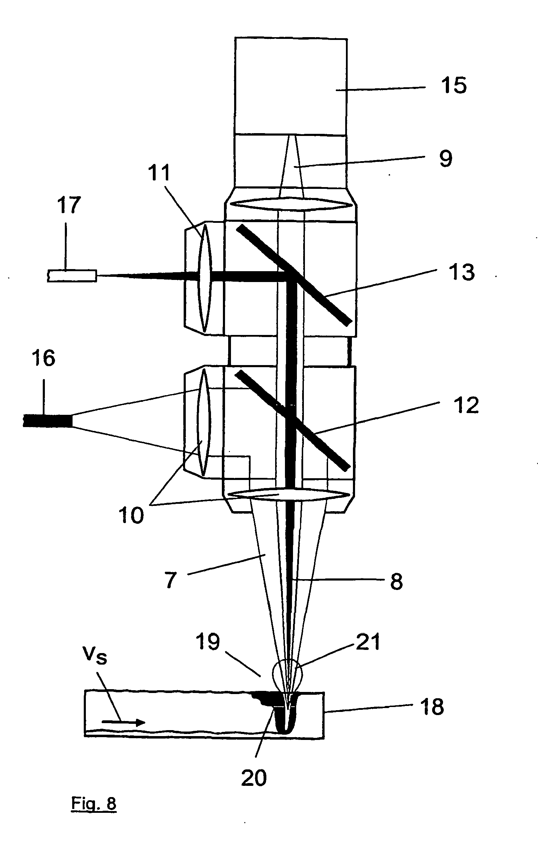

In einer beispielhaften Ausgestaltung wird ein optischer Strahl, insbesondere ein Laserstrahl 7, zur Bearbeitung des Werkstücks 18 eingesetzt. Figur 8 zeigt hierzu einen optischen Aufbau mit einem derartigen Werkzeug, in das der Sensor zur Vermessung der Relativbewegung integriert ist. Die Relativbewegung wird hierbei durch Korrelation aufeinander folgender Oberflächenbilder des Werkstücks 18 erfasst, die mit einer am Bearbeitungskopf angebrachten Kamera 15 aufgenommen werden. Hierbei kann, wie auch bei Bearbeitungsverfahren mit anderer Energiestrahlung, die Beobachtung und Beleuchtung koaxial zum Bearbeitungsstrahl erfolgen, so dass ein sehr kompakter Aufbau und eine Messung in unmittelbarer Nähe des TCP ermöglicht werden.

Figur 8 zeigt hierbei den Bearbeitungskopf mit einer Strahlformungs- bzw. Fokussieroptik 10 und einem dichroitischen Umlenkspiegel 12, mit denen der über eine Faser 16 eingekoppelte Laserstrahl 7 auf die Oberfläche des Werkstücks 18 gerichtet wird. Bei der Bearbeitung wird das Werkstück 18 mit der Geschwindigkeit vₛ unter dem Laserstrahl 7 hindurchbewegt, um das gewünschte Bearbeitungsergebnis zu erzielen. Der Bearbeitungskopf weist weiterhin eine Einkoppelöffnung für den Beleuchtungsstrahl 8 auf, im vorliegenden Fall ein Laserstrahl einer Laserdiode. Der Beleuchtungsstrahl 8 wird über eine Strahlteilerplatte 13 durch den dichroitischen Umlenkspiegel 12 hindurch zur Beleuchtung der Bearbeitungszone 19 des Werkstücks eingesetzt. Es versteht sich von selbst, dass die Wellenlänge des Beleuchtungsstrahls 8 geeignet gewählt sein muss, damit die Beleuchtung durch den dichroitischen Spiegel 12 hindurch erfolgen kann. Die Strahlformung erfolgt über eine Beleuchtungsoptik 11 in Verbindung mit dem für die Laserstrahlformung eingesetzten werkstückseitigen Teil der Fokussieroptik 10.

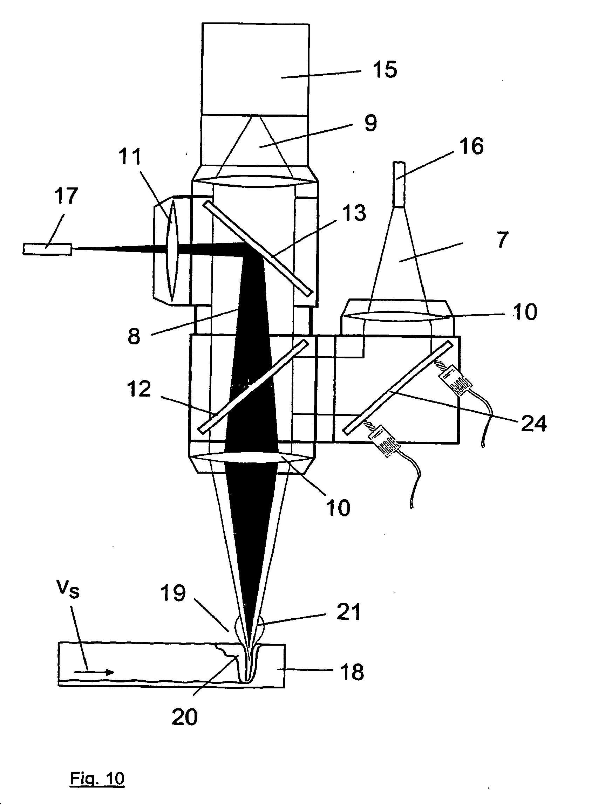

Die von der Werkstückoberfläche rückreflektierten optischen Strahlanteile 9 nehmen den gleichen Weg zurück durch die Strahlteilerplatte 13 hindurch auf eine CMOS-Kamera 15, die ein ortsaufgelöstes Bild der von der Bearbeitungszone 19 rückreflektierten Strahlung aufzeichnet. Die CMOS-Kamera 15 ist in diesem Beispiel, wie auch im Beispiel der Figuren 10, mit einer nicht dargestellten Auswerteeinrichtung verbunden, die aus den aufgenommenen Reflexionsmustern durch Vergleich die Relativbewegung ermittelt.

Bei der Bearbeitung des Werkstücks 18 mit dem Laserstrahl 7 wird durch die hohe Intensität des Laserstrahls 7 am Auftreffort der Werkstoff lokal in die gasförmige Phase 21 überführt und zum Teil lokal angeschmolzen, wie dies durch den aufgeschmolzenen Bereich 20 in der Figur 8 veranschaulicht ist. Während dieser Bearbeitung wird durch die koaxiale Beleuchtung und Aufzeichnung der von der Bearbeitungszone rückreflektierten Strahlanteile 9 dieser Beleuchtung ein Reflexionsmuster der Werkstückoberfläche um den momentan bearbeiteten Bereich erhalten. Durch wiederholte Aufzeichnung eines derartigen Reflexionsmusters während der Relativbewegung zwischen Werkstück 18 und Bearbeitungskopf kann die Relativgeschwindigkeit ermittelt werden.

Die Messung der Sollkontur kann bei dieser Ausgestaltung mit dem gleichen Sensor, d. h. einer CMOS- oder Hochgeschwindigkeitskamera, vorgenommen werden. Als Auswerteverfahren bietet sich die Erfassung der Konturposition durch Graubildauswertung von den im Auflicht aufgenommenen Bildern an. Ein derartiges Verfahren zur Auswertung von Bildern ist bekannt.

Figur 9 zeigt hierzu ein Beispiel für ein mit der Kamera aufgenommenes Bild bei einem Laserschweißprozess in schematisierter Form. Der in Bewegungsrichtung vor dem Bearbeitungspunkt 22 zu erkennende Spalt 23 beim Stumpfstoß kann für die Erfassung der Soll-Bewegungsbahn ausgewertet werden. Die gleiche Aufnahme bzw. eine zeitliche Abfolge derartigen Aufnahmen wird zur Erfassung der Relativbewegung zwischen Bearbeitungskopf und Werkstück 18 herangezogen.

Figur 10 zeigt schließlich ein Beispiel für einen Bearbeitungskopf mit einem in den Bearbeitungskopf integrierten, in Verstellspiegel 24 als zusätzlichen Aktor, über den der Laserstrahl 7 zur Feinpositionierung in zwei Dimensionen nachgeführt werden kann. Die weiteren Bestandteile entsprechen der bereits erläuterten Ausgestaltung der Figur 8. Auch diese Ausgestaltung ermöglicht eine koaxiale Beobachtung und Beleuchtung für die gleichzeitige Kontur- und Verschiebungsmessung. Durch Befestigung des Bearbeitungskopfes an der Roboterhand eines Roboters (nicht dargestellt) ist der Sensor in diesem Fall zur Roboterhand ortsfest.

Eine weitere Ausgestaltung des vorliegenden Verfahrens besteht darin, auf dem Werkstück punkt- oder linienförmige Markierungen als Absolutreferenz anzubringen, die vor der Bearbeitung durch die Handhabungseinrichtung angefahren werden. Ein Sensor auf dem Bearbeitungskopf erfasst die Position dieser Markierungen relativ zum TCP. Die Handhabungseinrichtung verfährt dann den Bearbeitungskopf an die Startposition der Bearbeitung, wobei die Bewegung des Bearbeitungskopfes relativ zum Werkstück gemessen wird. Eine Abweichung der Sollposition von der durch die Handhabungseinrichtung angefahrenen Position wird durch die Aktorik des Bearbeitungskopfes ausgeglichen.

### Bezugszeichenliste

- 1: Roboterhand
- 2: Werkzeug
- 3: Aktorik
- 4: TCP
- 5: Sensor
- 6: Kontur
- 7: Bearbeitungs-Laserstrahl
- 8: Beleuchtungsstrahl
- 9: rückreflektierte Strahlanteile
- 10: Fokussieroptik
- 11: Beleuchtungsoptik
- 12: dichroitischer Spiegel
- 13: Strahlteilerplatte
- 14: Scraper-Spiegel
- 15: CMOS-Kamera
- 16: Faser für Bearbeitungsstrahl
- 17: Faser für Beleuchtungsstrahl
- 18: Werkstück
- 19: Bearbeitungszone
- 20: aufgeschmolzener Bereich
- 21: gasförmige Phase
- 22: Bearbeitungspunkt
- 23: Spalt
- 24: Verstellspiegel

## Patentansprüche

1. Verfahren zur Feinpositionierung eines Werkzeugs bei der Bearbeitung eines Objekts, bei dem das Werkzeug (2) oder Objekt von einer Handhabungseinrichtung geführt wird, die mehrere Bewegungsachsen zur Grobpositionierung des Werkzeugs (2) oder Objekts aufweist, die eine kinematische Kette bilden, und mit einem zwischen einem Endglied (1) der kinematischen Kette und dem Werkzeug (2) oder Objekt angeordneten Aktor (3, 24), der in zumindest einer Dimension oder Achse eine höhere Stellgenauigkeit als die anderen Bewegungsachsen aufweist, eine Feinpositionierung des Werkzeugs oder Objekts erfolgt,
indem eine Relativbewegung, charakterisiert durch Relativgeschwindigkeit und relative Bewegungsrichtung, zwischen dem Objekt (18) und dem Werkzeug (2) oder Endglied (1) der kinematischen Kette mit zumindest einem Sensor (5) erfasst und bei einer Abweichung einer daraus errechneten Ist-Bewegungsbahn des Werkzeugs (2), des Objekts oder des Endglieds (1) von einer Soll-Bewegungsbahn durch eine Nachführung des Werkzeugs (2) oder Objekts mit dem Aktor (3) entgegenwirkt wird.

2. Verfahren nach Anspruch 1,
bei dem die Soll-Bewegungsbahn durch eine Steuereinheit der Handhabungseinrichtung vorgegeben wird.

3. Verfahren nach Anspruch 1,
bei dem zur Ermittlung der Soll-Bewegungsbahn eine am Objekt (18) künstlich angebrachte oder natürlich vorhandene Markierung (23) in Bearbeitungsrichtung vor einem momentanen Bearbeitungspunkt mit dem Sensor (5) oder einem weiteren Sensor erfasst und jeweils ein Punkt der Soll-Bewegungsbahn aus einer relativen Position der Markierung zum Sensor (5) oder weiteren Sensor ermittelt wird.

4. Verfahren nach Anspruch 3,
bei dem die Soll-Bewegungsbahn anhand einer am Objekt (18) durch Farb- oder Strukturveränderung künstlich aufgebrachten Markierung erfasst wird.

5. Verfahren nach Anspruch 3,
bei dem die Soll-Bewegungsbahn anhand einer Objektkontur erfasst wird.

6. Verfahren nach einem der Ansprüche 3 bis 5,
bei dem die Soll-Bewegungsbahn als Stellgröße für die Handhabungseinrichtung eingesetzt wird.

7. Verfahren nach einem der Ansprüche 1 bis 6,
bei dem die Relativbewegung mit einem starr am Endglied (1) der kinematischen Kette befestigten Sensor (5) erfasst wird.

8. Verfahren nach einem der Ansprüche 1 bis 7,
bei dem eine Kamera als Sensor (5) für die Erfassung der Relativbewegung eingesetzt wird, für die Erfassung der Relativbewegung eine Oberfläche des Objekts (18) im Bereich eines Bearbeitungspunktes mit optischer Strahlung (8) beleuchtet wird, von der Oberfläche des Objektes (18) im Bereich des Bearbeitungspunktes reflektierte optische Strahlung (9) wiederholt mit der Kamera erfasst wird, um optische Reflexionsmuster der Oberfläche des Objekts (18) zu unterschiedlichen Zeiten zu erhalten, wobei die wiederholte Erfassung in zeitlichen Abständen erfolgt, bei denen zeitlich aufeinander folgende Reflexionsmuster von überlappenden Oberflächenbereichen des Objekts (18) erhalten werden, und die Relativbewegung durch Vergleich der zeitlich aufeinander folgenden Reflexionsmuster ermittelt wird.

9. Verfahren nach Anspruch 8,
bei dem bei der Bearbeitung des Objekts (18) mit einem Bearbeitungsstrahl (7) die Erfassung der von der Oberfläche des Objekts (18) reflektierten optischen Strahlung (9) zumindest annähernd koaxial zum Bearbeitungsstrahl (7) erfolgt.

10. Verfahren nach Anspruch 8 oder 9,
bei dem bei der Bearbeitung des Objekts (18) mit einem Bearbeitungsstrahl (7) die Beleuchtung der Oberfläche des Objekts (18) zumindest annähernd koaxial zum Bearbeitungsstrahl (7) erfolgt.

11. Verfahren nach einem der Ansprüche 1 bis 10,
bei dem vor der Bearbeitung Referenzmarkierungen auf das Objekt (18) aufgebracht und durch die Handhabungseinrichtung angefahren werden, um die Position der Referenzmarkierungen relativ zum Werkzeug (2) mit dem Sensor (5) zur erfassen, und bei dem die Handhabungseinrichtung anschließend das Werkzeug (2) an eine Startposition der Bearbeitung fährt, wobei eine Relativbewegung zwischen dem Objekt (18) und dem Werkzeug (2) oder Endglied (1) der kinematischen Kette mit dem Sensor (5) erfasst und eine Abweichung von der Startposition durch eine Nachführung des Werkzeugs (2) mit dem Aktor (3) ausgeglichen wird.

12. Vorrichtung zur Feinpositionierung eines Werkzeugs bei der Bearbeitung eines Objekts, mit:
- einer Handhabungseinrichtung mit mehreren Bewegungsachsen zur Grobpositionierung eines Werkzeugs (2) oder Objekts, die eine kinematische Kette bilden,
- einem zusätzlichen Aktor (3), der an einem Endglied (1) der kinematischen Kette befestigt ist und eine Feinpositionierung des Werkzeugs (2) oder Objekts in zumindest einer Dimension oder Achse mit einer höheren Genauigkeit als die anderen Bewegungsachsen ermöglicht,
- zumindest einem Sensor (5), mit dem eine Relativbewegung, charakterisiert durch Relativgeschwindigkeit und relative Bewegungsrichtung, zwischen dem Objekt (18) und dem Werkzeug (2) oder Endglied (1) der kinematischen Kette erfassbar ist, und
- einer Steuereinrichtung, die bei einer Abweichung einer aus Messdaten des Sensors (5) errechneten Ist-Bewegungsbahn des Werkzeugs (2), des Objekts oder des Endglieds (1) von einer Soll-Bewegungsbahn den Aktor (3) zur möglichst vollständigen Kompensation dieser Abweichung ansteuert.

13. Vorrichtung nach Anspruch 12,
bei der die Steuereinrichtung so ausgebildet ist, dass sie die Soll-Bewegungsbahn aus Messdaten des Sensors (5) oder eines weiteren Sensors der Vorrichtung anhand einer am Objekt (18) künstlich angebrachten oder natürlich vorhandenen Markierung (23) berechnet, die mit dem Sensor (5) oder einem weiteren Sensor erfasst wird.

14. Vorrichtung nach Anspruch 12 oder 13,
bei dem der Sensor (5) starr am Endglied (1) der kinematischen Kette befestigt ist.

15. Vorrichtung nach Anspruch 14 mit einem Bearbeitungskopf, der eine Einkoppelöffnung für einen Bearbeitungsstrahl (7), eine Strahlformungsoptik (10), mit der der Bearbeitungsstrahl (7) entlang einer Strahlachse durch eine Austrittsöffnung auf eine vor dem Bearbeitungskopf liegende Bearbeitungsebene gerichtet wird, und den Sensor (5) aufweist, der eine Kamera ist und der mechanisch fest mit dem Bearbeitungskopf verbunden und so angeordnet ist, dass er von der Bearbeitungsebene parallel oder unter einem kleinen Winkel zur Strahlachse reflektierte optische Strahlung (9) ortsaufgelöst erfassen kann, wobei die Steuereinrichtung einen Bildverarbeitungsalgorithmus zur Auswertung zeitlich aufeinander folgender Reflexionsmuster für die automatisierte Bestimmung der Relativbewegung zwischen dem Bearbeitungskopf und dem Objekt (18) aufweist.

16. Vorrichtung nach Anspruch 15,
bei der der Bearbeitungskopf eine weitere Einkoppelöffnung für einen Beleuchtungsstrahl (8) und eine Beleuchtungsoptik (11) aufweist, die den Beleuchtungsstrahl zumindest annähernd koaxial zur Strahlachse des Bearbeitungsstrahls (7) auf die Bearbeitungsebene richtet.

## Claims

1. A method for the fine positioning of a tool during the machining of an object, in which the tool (2) or object is guided by a handling apparatus, which has multiple movement axes for the coarse positioning of the tool (2) or object, which form a kinematic chain, and in which by means of an actuator (3, 24), situated between a terminal link (1) of the kinematic chain and the tool (2) or object, which has a higher positioning precision than the other movement axes in at least one dimension or axis, a fine positioning of the tool or object is performed,
in that a relative movement, **characterized by** relative velocity and relative movement direction, between the object (18) and the tool (2) or terminal link (1) of the kinematic chain is detected using at least one sensor (5), and a deviation of an actual movement path of the tool (2), the object, or the terminal link (1) calculated therefrom from a target movement path being counteracted by tracking of the tool (2) or the object using the actuator (3).

2. The method according to Claim 1,
wherein the target movement path is predefined by a control unit of the handling apparatus.

3. The method according to Claim 1,
wherein, to ascertain the target movement path, a marking (23), which is artificially attached or naturally present on the object (18), is detected in the machining direction in front of a current machining point using the sensor (5) or a further sensor, and one point of the target movement path at a time is ascertained from a relative position of the marking to the sensor (5) or the further sensor.

4. The method according to Claim 3,
wherein the target movement path is detected on the basis of a marking, which is artificially applied to the object (18) by color or structural change.

5. The method according to Claim 3,
wherein the target movement path is detected on the basis of an object contour.

6. The method according to one of Claims 3 through 5,
wherein the target movement path is used as a manipulated variable for the handling apparatus.

7. The method according to one of Claims 1 through 6,
wherein the relative movement is detected using a sensor (5) fastened rigidly on the terminal link (1) of the kinematic chain.

8. The method according to one of Claims 1 through 7, wherein, for detecting the relative movement, a camera is used as the sensor (5), a surface of the object (18) is illuminated in the area of a machining point using optical radiation (8), optical radiation (9) reflected from the surface of the object (18) in the area of the machining point is repeatedly detected using the camera, in order to obtain optical reflection patterns of the surface of the object (18) at different times, the repeated detection occurring at time intervals in which chronologically sequential reflection patterns of overlapping surface areas of the object (18) are obtained, and the relative movement being ascertained by comparing the chronologically sequential reflection patterns.

9. The method according to Claim 8,
wherein, during the machining of the object (18) using a machining beam (7), the detection of the optical radiation (9) reflected from the surface of the object (18) is performed at least approximately coaxially to the machining beam (7).

10. The method according to Claim 8 or 9,
wherein, during the machining of the object (18) using a machining beam (7), the illumination of the surface of the object (18) is performed at least approximately coaxially to the machining beam (7).

11. The method according to one of Claims 1 through 10,
wherein, before the machining, reference markings are applied to the object (18) and approached by the handling apparatus, in order to detect the position of the reference markings in relation to the tool (2) using the sensor (5), and the handling apparatus subsequently moves the tool (2) to a starting position of the machining, a relative movement between the object (18) and the tool (2) or terminal link (1) of the kinematic chain being detected using the sensor (5) and a deviation from the starting position being compensated for by tracking the tool (2) using the actuator (3).

12. A device for the fine positioning of a tool during the machining of an object, having:
- a handling apparatus having multiple movement axes for the coarse positioning of a tool (2) or object, which form a kinematic chain,
- an additional actuator (3), which is fastened on a terminal link (1) of the kinematic chain and allows a fine positioning of the tool (2) or object in at least one dimension or axis at a higher precision than the other movement axes,
- at least one sensor (5), using which a relative movement, **characterized by** relative velocity and relative movement direction, between the object (18) and the tool (2) or terminal link (1) of the kinematic chain is detectable, and
- a control unit which, in the event of a deviation of an actual movement path of the tool (2), the object, or the terminal link (1), which is calculated from measured data of the sensor (5), from a target movement path, activates the actuator (3) for the most complete possible compensation of this deviation.

13. The device according to Claim 12,
wherein the control unit is implemented so that it calculates the target movement path from measured data of the sensor (5) or a further sensor of the device on the basis of a marking (23) artificially attached or naturally existing on the object (18), which is detected using the sensor (5) or a further sensor.

14. The device according to Claim 12 or 13,
wherein the sensor (5) is rigidly fastened on the terminal link (1) of the kinematic chain.

15. The device according to Claim 14 having a machining head, which has a coupling opening for a machining beam (7), a beam shaping optic (10), using which the machining beam (7) is directed along a beam axis through an outlet opening on a machining plane lying in front of the machining head, and the sensor (5), which is a camera and is connected mechanically fixed to the machining head and is situated in such a way that it may detect the optical radiation (9) reflected from the machining plane parallel or at a small angle to the beam axis in a locally-resolved way, the control unit having an image processing algorithm for analyzing chronologically sequential reflection patterns for the automated determination of the relative movement between the machining head and the object (18).

16. The device according to Claim 15,
wherein the machining head has a further coupling opening for an illumination beam (8) and an illumination optic (11), which directs the illumination beam onto the machining plane at least approximately coaxially to the beam axis of the machining beam (7).

## Revendications

1. Procédé pour le positionnement précis d'un outil lors de l'usinage d'un objet, pour lequel l'outil (2) ou l'objet est guidé par un dispositif de manutention qui présente plusieurs axes de déplacement pour positionnement grossier de l'outil (2) ou de l'objet, qui forment une chaîne cinématique et avec un actionneur (3, 24) disposé entre un élément terminal (1) de la chaîne cinématique et l'outil (2) ou objet, qui présente dans au moins une dimension ou un axe, une précision de réglage plus élevée que les autres axes de déplacement, un positionnement précis de l'outil ou de l'objet ayant lieu,
dans lequel un déplacement relatif **caractérisé par** une vitesse relative et un sens de déplacement relatif, est saisi avec au moins un capteur entre l'objet (18) et l'outil (2) ou l'élément terminal (1) de la chaîne cinématique et lors d'un écart d'une trajectoire réelle de l'outil (2), de l'objet ou de l'élément terminal (1) calculé à partir de celle-ci par rapport à une trajectoire théorique, celui-ci est compensé avec l'actionneur (3) par un guidage de rattrapage de l'outil (2) ou de l'objet.

2. Procédé selon la revendication 1 pour lequel la trajectoire théorique est spécifiée par une unité de commande du dispositif de manutention.

3. Procédé selon la revendication 1 pour lequel pour déterminer la trajectoire théorique un repérage (23) disposé artificiellement ou existant naturellement sur l'objet (18) dans le sens de l'usinage est saisi avant un point d'usinage momentané avec le capteur (5) ou avec un autre capteur et à chaque fois un point de la trajectoire théorique est déterminé à partir d'une position relative du repérage au capteur (5) ou un autre capteur.

4. Procédé selon la revendication 3 pour lequel la trajectoire théorique est saisie à l'aide d'un repérage artificiellement appliquée sur l'objet (18) par modification de couleur ou de structure.

5. Procédé selon la revendication 3 pour lequel la trajectoire théorique est saisie à l'aide d'un contour d'objet.

6. Procédé selon une quelconque des revendications 3 à 5 pour lequel la trajectoire théorique est utilisée en tant que valeur de réglage pour le dispositif de manutention.

7. Procédé selon une quelconque des revendications 1 à 6 pour lequel le déplacement relatif est saisi avec un capteur (5) fixé de façon rigide sur l'élément terminal (1) de la chaîne cinématique.

8. Procédé selon une quelconque des revendications 1 à 7 pour lequel une caméra est utilisée comme capteur (5) pour la saisie du déplacement relatif, pour la saisie du déplacement relatif une surface de l'objet (18)est éclairée dans la zone du point d'usinage avec un rayonnement (8) optique, un rayonnement (9) optique réfléchi est à nouveau saisi par la caméra depuis la surface de l'objet (18) dans la zone du point d'usinage pour recevoir des échantillon de réflexion optique de la surface de l'objet (18) à des moments différents, la saisie répétée ayant lieu à des intervalles de temps pour lesquels des échantillons de réflexion se succédant dans le temps sont reçus par des zones de surfaces de l'objet (18) se chevauchant et le déplacement relatif est déterminé par comparaison des échantillons de réflexion se succédant dans le temps.

9. Procédé selon la revendication 8 pour lequel lors de l'usinage de l'objet (18) avec un rayon d'usinage (7), la saisie du rayonnement (9) optique réfléchi par la surface de l'objet (18) a lieu au moins presque coaxialement au rayon d'usinage (7).

10. Procédé selon la revendication 8 ou 9 pour lequel lors de l'usinage de l'objet (18) avec un rayon d'usinage (7), l'éclairage de la surface de l'objet (18) a lieu au moins presque coaxialement au rayon d'usinage (7).

11. Procédé selon une quelconque des revendications 1 à 10 pour lequel avant l'usinage des repères de référence sont appliqués sur l'objet (18) et par lesquels le dispositif de manutention est mis en marche pour saisir avec le capteur (5) la position des repères de référence par rapport à l'outil (2) et pour lequel le dispositif de manutention faisant suite à l'outil (2) va à une position initiale de l'usinage, pour lequel un déplacement relatif est saisi avec le capteur (5) entre l'objet (18) et l'outil (2) ou l'élément terminal (1) de la chaîne cinématique et un écart de la position initial est compensé avec l'actionneur (3) par un guidage de rattrapage de l'outil (2).

12. Dispositif pour le positionnement précis d'un outil lors de l'usinage d'un objet, avec :
- un dispositif de manutention avec plusieurs axes de déplacement pour le positionnement grossier d'un outil (2) ou objet qui forment une chaîne cinématique,
- un actionneur supplémentaire (3) qui est fixé à un élément terminal (1) de la chaîne cinématique et permet un positionnement précis de l'outil (2) ou objet dans au moins une dimension ou un axe avec une précision plus élevée que les autres axes de déplacement,
- au moins un capteur (5), avec lequel on peut saisir un déplacement relatif, **caractérisé par** une vitesse relative et un sens de déplacement relatif, entre l'objet (18) et l'outil (2) ou élément terminal (1) de la chaîne cinématique, et
- un dispositif de commande qui, en cas d'écart d'une trajectoire réelle de l'outil (2), de l'objet ou de l'élément terminal (1) calculé à partir des données de mesure du capteur (5) par rapport à une trajectoire théorique, pilote l'actionneur (3) pour compenser le plus complètement possible cet écart.

13. Dispositif selon la revendication 12 pour lequel le dispositif de commande est constitué de telle sorte qu'il calcule la trajectoire théorique à partir de données de mesure du capteur (5) ou d'un autre capteur du dispositif à l'aide d'un repérage artificiellement appliqué ou existant naturellement sur l'objet (18), qui est saisi avec le capteur (5) ou un autre capteur.

14. Dispositif selon la revendication 12 ou 13 pour lequel le capteur (5) est fixé de façon rigide sur l'élément terminal (1) de la chaîne cinématique.

15. Dispositif selon la revendication 14 avec une tête d'usinage, qui présente une ouverture d'injection pour un rayon d'usinage (7), un système optique de formation de rayon (10), avec lequel le rayon d'usinage (7) est dirigé le long d'un axe de rayon par une ouverture de sortie sur un plan d'usinage situé devant la tête d'usinage et le capteur (5) qui est une caméra et qui est relié mécaniquement fixe à la tête d'usinage et est disposé de telle manière qu'il peut saisir parallèlement au plan d'usinage ou sous un petit angle par rapport à l'axe de rayon, le rayonnement (9) optique réfléchi, pour lequel le dispositif de commande présente un algorithme de traitement d'images pour exploiter des échantillons de réflexion se succédant dans le temps pour la détermination automatisée du déplacement relatif entre la tête d'usinage et l'objet (18).

16. Dispositif selon la revendication 15 pour lequel la tête d'usinage présente une autre ouverture d'injection pour un rayon d'éclairage (8)et un système optique d'éclairage (11) qui oriente le rayon d'éclairage au moins presque coaxialement à l'axe de rayon du rayon d'usinage (7) sur le plan d'usinage.
